# EUROPEAN PATENT SPECIFICATION

(11) **EP 1 088 582 B1**
(45) Date of publication and mention of the grant of the patent: **02.07.2003**
(21) Application number: 00204008.7
(22) Date of filing: 26.04.1996
(51) Int. Cl.: B01D 33/03, E21B 21/06

(54) **Method of screening using a shale shaker**
Siebverfahren mittels einer Schieferschüttelvorrichtung
Procédé de tamisage à l' aide d' un tamis vibrant

(30) Priority: 26.04.1995 US 430933
(43) Date of publication of application: 04.04.2001
(62) Divisional of application: 96915012.7
(73) Proprietor: Varco I/P, Inc., Houston, TX 77051 (US)
(72) Inventor: Seyffert, Kenneth Wayne, Houston, TX 77018 (US)
(74) Representative: Lucas, Brian Ronald

(56) References cited:
- GB-A- 832 041
- GB-A- 2 085 744
- US-A- 2 439 543
- US-A- 5 392 925

## Description

The present invention relates to a method of screening solids from a solids-laden Fluid with a shale shaker.

During the drilling of oil and gas wells drilling mud, which is typically a mixture of clay, water and various additives, is pumped down a hollow drill string and exits through holes in a drillbit. The mud picks up rock cuttings and other solids from the well and carries them to the surface in the space between the wall of the well and the drill string. At the top of the well, the solids-laden drilling mud is introduced into a shale shaker which separates the solids from the drilling mud which is reused.

Shale shakers generally comprise a basket containing a plurality of screens arranged in a single plane. In use, the baskets are vibrated to facilitate the recovery of the drilling fluid.

GB 832 041 discloses an apparatus for de-watering sludge in sewage disposal installations. The apparatus comprises an upper screen positioned over and spaced from a lower screen. Each screen comprises three sections arranged in a stepped formation. In use the upper screen provides a coarse screening function with a large percentage of sludge falling onto the finer lower screen below. The stepped formation of each screen subjects the sludge to a tumbling action.

Whilst most shale shakers work acceptably under their design loading problems arise when the supply surges, i.e. there is a temporary increase in the flow or the drilling mud temporarily contains an excess of solids.

During surges drilling mud often flows over the screens and leaves the shale shaker with the solids. This results in a loss of the drilling mud which is expensive.

In order to help reduce this problem the present invention provides a method as set out in Claim 1.

For a better understanding of the invention reference will now be made, by way of example, to the accompanying drawings, in which:-
Fig. 1 is a perspective end view of one embodiment of a shale shaker in accordance with the present invention without screens;
Fig. 2 is another perspective end view of the shale shaker of Fig. 1;
Fig. 3 is a schematic side view, in cross-section, of the shale shaker shown in Fig. 1 but fitted with screens;
Fig. 4 is a view taken on line IV-IV of Fig. 3 with parts omitted for clarity; and
Fig. 5 is a top view of the shale shaker of Fig. 1 with parts omitted for clarity.

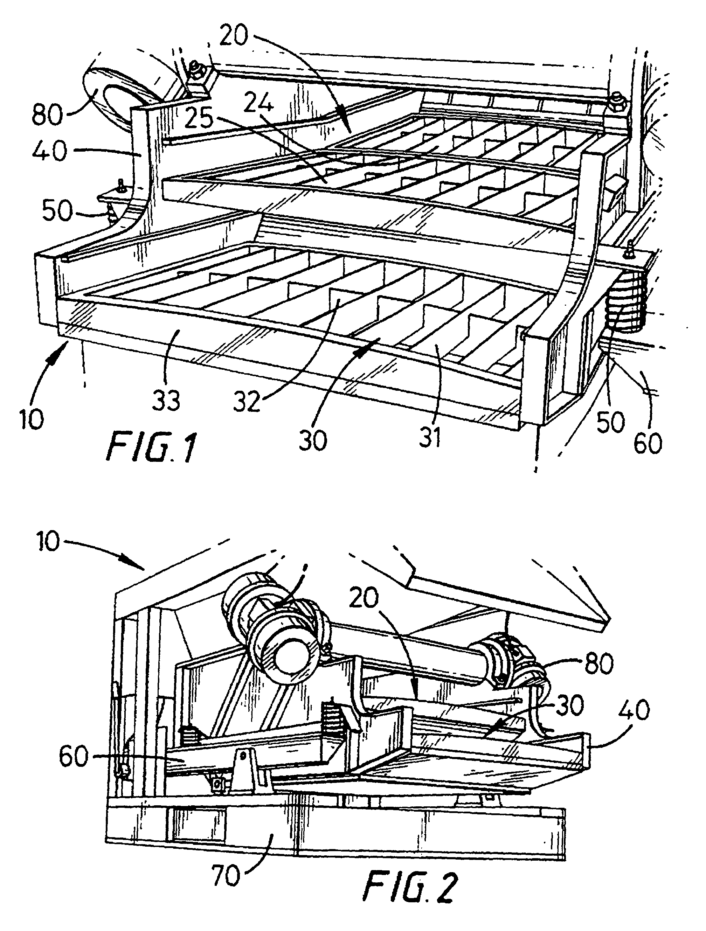

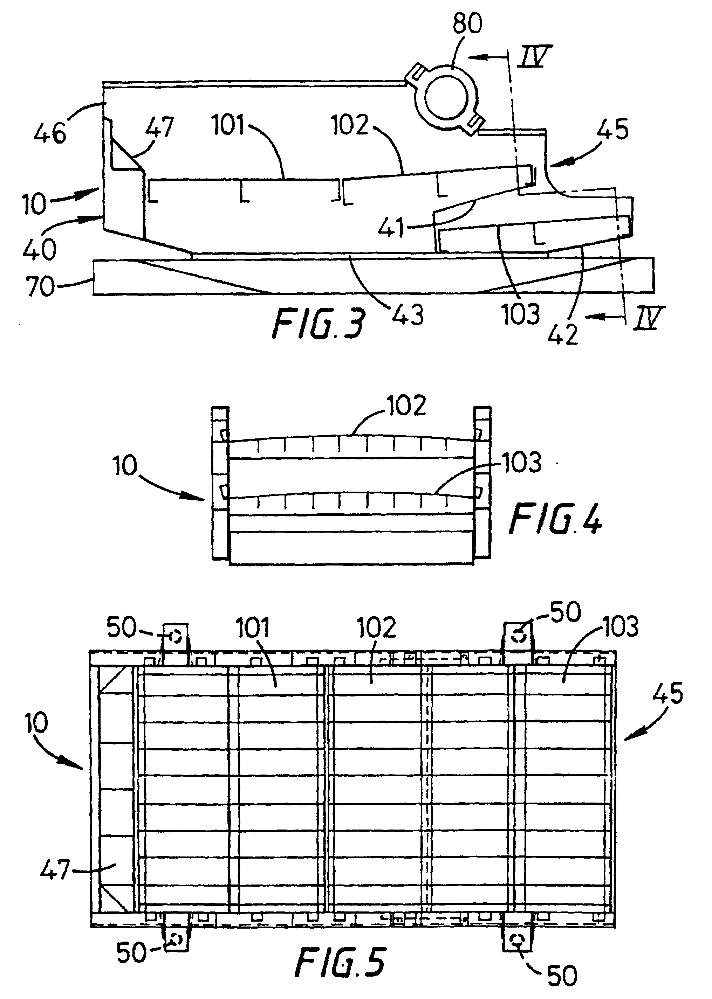

Referring to Figures 1 and 2, a shale shaker 10 has an upper screen support 20 for supporting two upper screens 101, 102 (shown in Figures 3 to 5) and a lower screen support 30 for supporting a lower screen 103 (shown in Figures 3 to 5). The upper screen support 20 and lower screen support 30 are fixed in a basket 40. The basket 40 is mounted on springs 50 which are supported by a frame 60 which is mounted to a base 70. A vibrating apparatus 80 for vibrating the screens 101, 102, 103 is mounted on the basket 40.

As shown in Figure 1, the lower screen support 30 comprises longitudinal cross beams 31, transverse cross beams 32 and an outer frame 33 surrounding the cross beams. The lower screen support 30 is inclined upwardly towards the mouth 45 of the shale shaker 10.

The upper screen support comprises a first section 24 and a second section 25. The first and second sections 24, 25 are each similar in construction to the lower support 30. The first section 24 lies horizontally while the second section 25 is inclined upwardly towards mouth 45 of the shale shaker 10. Fifty percent of the lower screen support underlies the upper screen support.

Referring now to Figure 3, the basket 40 also comprises a flow back pan 41 which is disposed between the upper screen support 20 and the lower screen support 30. Another flow back pan 42 is disposed adjacent the lower screen support 30.

The basket 40 also comprises a feed opening 46 and a deflector plate 47. An opening 43 beneath the upper and lower screen supports 20, 30 leads to a sump.

The vibrating apparatus 80 is of a known type which generally comprises a motor and an eccentric load.

The screens 101, 102, 103 in Figures 3 to 5 are shown schematically for simplicity. The upper screens 101, 102 are, however, provided with course mesh while finer mesh is provided on the lower screen 103. In a second embodiment (not shown) the upper and lower screens 101, 102, 103 comprise at least one three-dimensional screen having a "hill and valley" surface. The "hills" may extend from one end of the screen to the other in the same general direction as the movement of solids along the top of the screen. Alternatively the "hills" may extend transverse to this direction of movement. If desired, only a portion of the three dimensional screen is undulant and the remainder is flat. In a third embodiment (not shown) the basket 40 may be tilted by 5°.

Before use, the upper and lower screens 101, 102, 103 are fitted into the shale shaker 10. The vibrating apparatus 80 is continually vibrating screens 101, 102, 103 during the below described operations.

When the shale shaker is in normal operation, the material to be separated (generally a mixture of drilling mud and stone chips), enters the shale shaker 10 through feed opening 46. The material to be separated drops on to deflector 47 and travels along upper screens 101 and 102. Liquid and small particles of the material to be separated fall through the mesh 101, 102 while the larger particles remain on the screens 101, 102. The flow back pan 41 prevents the liquid and small particles which pass through the upper screen 102 falling onto the lower screen 103 and guides the material into a sump. The larger particles are vibrated towards the mouth 45 end of the basket 40 where they drop onto the lower screen 103 and subsequently fall out of the mouth 45 onto a waste conveyor or into a skip. In normal operation little or no drilling mud reaches the lower screen 103.

During surges, i.e. periods in which the input of mud is temporarily increased, or the amount of solids in the mud is temporarily increased, the material to be separated enters the shale shaker 10 through feed opening 46. Whereas during normal operation substantially all the mud is separated from the solids during passage across the upper screens 101, 102 when there is a surge a significant quantity of drilling mud flows onto the lower screen 103 together with the solids and is screened thereon. The flow back pan 42 guides the liquid into the sump.

The larger particles vibrate along the screen 103 towards the mouth 45 of the shale shaker 10 where they exit onto a waste conveyor or into a skip.

## Claims

1. A method of screening solids from a solids-laden fluid with a shale shaker (10), which method comprises the steps of:
(a) arranging a first screen (102) and a second screen (103) in said shale shaker (10) such that part of said second screen (103) underlies part of said first screen (102);
(b) supplying a solids-laden fluid to said shale shaker (10);
(c) vibrating said first (102) and second (103) screens; and
(d) passing said solids-laden fluid over said first screen (102); **characterised by** the step of:
(e) directing at least part of the fluid which flows through the first screen (102) into a sump with a flow back pan (41) which underlies that part of said first screen (102) which overlies said second screen (103).

## Patentansprüche

1. Verfahren zum Aussieben von Festkörpern aus einem festkörperhaltigen Fluid mittels eines Schlammschüttelsiebs (10), wobei das Verfahren die folgenden Schritte umfaßt:
(a) Anordnen eines ersten Siebs (102) und eines zweiten Siebs (103) in dem Schlammschüttelsieb (10) in der Weise, daß ein Teil des zweiten Siebs (103) unter einem Teil des ersten Siebs (102) liegt;
(b) Liefern eines festkörperhaltigen Fluids an das Schlammschüttelsieb (10);
(c) Versetzen des ersten Siebs (102) und des zweiten Siebs (103) in Schwingungen; und
(d) Leiten des festkörperhaltigen Fluids über das erste Sieb (102); **gekennzeichnet durch** den folgenden Schritt:
(e) Leiten wenigstens eines Teils des **durch** das erste Sieb (102) strömenden Fluids mittels einer Rückströmwanne (41), die unter jenem Teil des ersten Siebs (102) liegt, der über dem zweiten Sieb (103) liegt, in einen Sumpf.

## Revendications

1. Procédé pour tamiser des solides à partir d'un fluide chargé de solides au moyen d'un tamis vibrant (10), procédé qui comprend les étapes consistant à :
(a) disposer un premier tamis (102) et un deuxième tamis (103) dans ledit tamis vibrant (10) de sorte qu'une partie dudit deuxième tamis (103) est au-dessous d'une partie dudit premier tamis (102) ;
(b) fournir un fluide chargé de solides audit tamis vibrant (10) ;
(c) faire vibrer lesdits premier (102) et deuxième (103) tamis ; et
(d) faire passer ledit fluide chargé de solides sur ledit premier tamis (102) ; **caractérisé par** l'étape consistant à :
(e) diriger au moins une partie du fluide qui circule à travers le premier tamis (102) dans un collecteur équipé d'un panneau à écoulement inversé (41) qui est au-dessous de cette partie dudit premier tamis (102) qui est au-dessus dudit deuxième tamis (103).
